# EUROPEAN PATENT APPLICATION

(11) **EP 1 279 435 A1**
(43) Date of publication of application: **29.01.2003**
(21) Application number: 01203272.8
(22) Date of filing: 30.08.2001
(51) Int. Cl.: B01J 20/28, B01D 39/16

(54) **A filter and a method for making a filter**

(30) Priority: 25.07.2001 GB 0118123
(71) Applicant: 3M Innovative Properties Company, St. Paul, Minnesota 55133-3427 (US)
(72) Inventor: Klijn, John, 1831 Diegem (BE)
(74) Representative: Voortmans, Gilbert J.L.

(57) **Abstract**

A method of producing a filter material is disclosed, the method including:
i) applying droplets of a bonding agent over at least a portion of a layer of an open fiber matrix (10) to form adhesive contacting regions bound to individual ones of at least some of the fibers of said matrix layer;
ii) applying an adsorbate filter media to at least a part of said portion such that at least some of said adsorbate media is substantially fixed in place in said matrix layer by said adhesive contacting regions, thereby fixing in place adsorbate media whilst maintaining a substantially open fiber structure of said matrix layer

A filter material is also disclosed, comprising an open fiber matrix layer (10) which incorporates an adsorbate filter media and is joined on an upstream side with a support layer, characterized in that said adsorbate filter media is held in place in said matrix layer (10) by droplets of an applied bonding agent which are bound to individual ones of the fibers of said matrix layer in such a manner that said bonding agent does not substantially affect the open fiber structure of said matrix layer.

## Description

### Field of the Invention

This invention relates to filter materials, filter elements and filters and in particular to such materials, elements or filters suitable for filtering fluids, especially filtering out air borne particulate and gaseous pollution and to a method of making such materials, elements or filters. The filter materials, elements and filters may find advantageous use as or in a cabin air filter in vehicles among others.

### Background to the Invention

Air pollution has long been acknowledged as a problem and such pollution can be a potential hazard to health. Both particulate pollution and/or the gaseous pollution may pose a health problem

If left unchecked, both of these forms of pollution can find their way into the cabin of a vehicle, such as a passenger car, an airplane, a submarine, through a heating and ventilating system, or for instance into an air conditioning system for buildings. Pollution can be drawn in from the environment, e.g. pollen or exhaust fumes and the problem can become particularly acute in dense traffic jams and in tunnels. Further degradation of the interior air quality may come from within the vehicle itself from, for example, users' clothes, skin particles, hair or cigarette smoke. Many prior art arrangements may not alleviate the situation as well as might be preferred. Awareness of these problems is being recognized and expectations continue to grow among vehicle manufacturers, users and regulatory bodies.

To this end, it is becoming more common practice for vehicle manufacturers to provide a vehicle heating and ventilating system with a filter arrangement to reduce the amount of pollution entering the cabin area or being recirculated within it. One such prior art arrangement is discussed in the context of the general problem in an article entitled *"Interior air purification in motor vehicles"* by *Gebhard Schweizer* and *Kay Seidensticker,* from page 319 onwards in the periodical *"Automotive Technology International '92"* , (ISSN 0950-4400).

The filter intake area or under-hood space available in many vehicles for cabin air filters places limitations on the design of these components, in particular on their size and position. This has inevitable consequences on filter construction and operation. Performance is often a compromise between several parameters, some of which conflict as will now be discussed in brief.

It is desirable to keep pressure drop across the filter to a minimum and therefore also its thickness. This is because pressure drop has a direct bearing on the size of an associated air-induction fan and its subsequent power consumption and generated noise. The lack of space, however, tends to a low frontal area of the filter element and leads the designer to conclude that the element must be made thicker in order to achieve adequate filtering performance. Low filter area and thick filter elements increases pressure drop.

A second design consideration is the need to capture airbome particles before they enter the cabin. For this purpose two types of filters are available, absolute and non-absolute, both of which provide mechanical obstruction to particles in the air-stream.

Absolute particle trap filters have pore sizes which are smaller than the particles to be removed. Their main mechanism is screening of the particles but they are expensive and have high flow resistance. In addition, they clog rapidly and this conflicts with a further vehicle requirement, which is that the filter element should maintain its useful properties long enough not to raise the servicing costs of the vehicle to which it is fitted beyond an acceptable level.

Non-absolute filters have pore sizes which are many times greater than the particles to be removed and perform by taking into account how particles behave in moving air-streams. By placing many small fibers in the path of moving particles, targets are presented and by varying the size and distribution of these fibers a maze is formed which maintains good through flow of air and particle loading, while still capturing particles of a wide spread in size. It is this type of particle filter which is currently in favor for vehicular cabin air cleaner filter elements.

The particle capture efficiency of a filter media can be significantly improved by using as the particle capture mechanism a media formed of non-woven electrically charged fibers. Such media is known in the art as "electret" media and is currently available, for example, from the Minnesota Mining and Manufacturing Company under the trade name "3M Filtrete".

Electret fibers can be produced by various methods. Fibrillated fibers tend to be rectangular in cross section as they are generated by fibrillating films and hold substantially permanent electrostatic charges throughout. The rectangular cross section of the fibers and the bi-polar nature of their charge produces an inhomogeneous field around them This causes uncharged particles to become dipoles, which are attracted by the fibers due to coulombic forces. In this manner a high through-flow of air can be maintained, keeping pressure drop across the filter element to a minimum, while at the same time providing a highly efficient capture mechanism for airborne particles.

A third design consideration is to keep to a minimum the amount of undesirable gaseous material entering the vehicle cabin. The general term for mechanisms which do this is "sorption", which is more specifically distinguished as "absorption" and "adsorption". "Adsorption" is the concentration of a substance at a surface of a second phase. If the substance is concentrated in the bulk of the sorbing material, the term used is "absorption". The name for the substance which accumulates in the second phase is "adsorbens" and the material which adsorbs the adsorbens is called the "adsorbate". For operation, the mechanism relies on the affinity between adsorbate and adsorbens which leads to either physical or chemical sorption. The adsorbate media often comprises a material such as activated carbon and, so as to provide the highest possible surface area to the airflow, is commonly employed in a granulated or powdered form.

Several publications disclose methods of producing an adsorbate filter layer. In US 4,793,837 for example, a filter pad of randomly orientated synthetic fibers is passed through a slurry including odor adsorbing particles in solution, in order to distribute those particles throughout the pad. In this arrangement, it is necessary to provide a slurry bath, with all the environmental concerns that might generate. Furthermore, it is also necessary to pass the pad through a set of rollers after soaking to rid the pad of excess slurry.

In US 4,433,024 adsorbate particles are included in a fiber matrix, which is then sandwiched by between two sheets of material previously coated with an adhesive. This arrangement is disclosed in relation to protective clothing. If the material is subjected to a high vibration application, however, particles of adsorbate media may be dislodged.

In WO 98/42903, an arrangement is proposed for introducing and distributing adsorbate particles into a non-woven mass and attempting to fix them in position. The proposed fixing method includes heating the filter mass, so that the carbon particles fuse with the fibers, and then cooling the mass. This arrangement requires a temperature regulated process in order to control the heat used for the fusion between the filter media.

In WO 00/20099 a method of producing a filter layer is disclosed in which a particulate filter layer comprising hot-melt fibers is extruded through a nozzle onto a distant support layer. During extrusion, the hot-melt fibers are at a temperature at which their bonding properties are activated and the extrusion is bombarded with adsorbate particles, such that a quantity of these particles sticks to the fibers. The extrusion, now still sticky and distributed with adsorbate particles, is deposited onto a backing/support layer to which it sticks. As the extrusion cools, the hot melt fibers retain particles of the adsorbate media fixed to them and furthermore the hot-melt fixes the now hybrid filter layer to the backing layer. This arrangement requires specialist manufacturing plant and process control in order to provide the necessary degree of temperature control for proper operation of the hot-melt based extrusion process.

While it is disclosed in WO 00/20099 that such an adsorbate filter layer may also have some capability to filter particles, such capabilities are generally limited and accordingly its thus recommended in this PCT application to combine the adsorbate filter layer with further filter layers to provide desired particulate filter capabilities.

An arrangement of a combination filter is disclosed in EP0383236, in which separate layers of particle filter media and adsorbate filter media are placed one behind the other. This tends to a rather thick filter element due to the number of layers. As a result, such a combination filter generally has a high pressure drop. Furthermore, the manufacturing cost of such a filter is generally high.

Accordingly, it would be desirable to find a combination filter that can be produced at low cost and in a convenient way. Desirably, such a combination filter would have a reduced pressure drop without however substantially sacrificing particulate filtering efficiency and efficiency of filtering gaseous pollution. It would in particular be desirable to find a combination filter that is suitable for use in a vehicle, in particular a motor vehicle such as a car or a truck, to filter air entering into the passenger cabin of the vehicle. Accordingly, desirably, the combination filter meets requirements that are imposed for such application in vehicles in particular with respect to safety and durability. Desirably, the combination filter can be pleated to provide a pleated combination filter.

### Disclosure of the Invention

The invention provides a method of producing a filter material, the method including:
i) applying droplets of a bonding agent over at least a portion of a layer of an open fiber matrix (10) to form a plurality of discrete, for example pointwise, adhesive contacting regions distributed over and bound to individual ones of at least some of the fibers of said matrix layer;
ii) applying an active particulate filter media to at least a part of said portion such that at least some of said active particulate filter media is substantially fixed in place in said matrix layer by said adhesive contacting regions, thereby fixing in place said active particulate filter media whilst maintaining a substantially open fiber structure of said matrix layer.

It has been found that the method allows for the production of a combination filter in a convenient and cost effective way. Moreover, the filter material obtained generally has a good particulate filter efficiency combined with a good efficiency for filtering gaseous pollution. In particular, the method of the invention typically allows for obtaining a combination filter that has a lower pressure drop compared to combination filters that have a separate adsorbate filter layer and particle filter layer as known in the art, while maintaining similar particle filtration efficiency and efficiency for filtering or adsorbing gaseous pollution.

The filter material produced is air permeable and can be provided as a pleatable filter. Filter material typically produced in accordance with the invention generally is difficult to burn. Typically, the bum rate as tested under the standard FMVSS-302 is less than 100mm/min., preferably less than 50mm/min. Accordingly, filter material can be obtained that meets the safety requirements of the automotive industry regarding low capability of burning of the material.

The open fiber matrix (10) is typically a matrix that when formed into a filter layer without being provided with the bonding agent and active particulate filter media, has a capability of filtering particles that have an average size of at least 2µm, preferably also has a capability of filtering particles that have an average size of 0.2µm to 1µm, and more preferably further has the capability of filtering particles that have an average size as low as 0.1µm. For example, in one embodiment, the open fiber matrix (10) without being provided with the bonding agent and active particulate filter media has a particle efficiency determined according to DIN71460 Part 1, of at least 50%, preferably at least 70% and more preferably at least 85% for particles having a size of 2µm or larger. In a further embodiment, the open fiber matrix (10) has a particle efficiency of at least 10%, preferably at least 30%, more preferably at least 40% to 70% for particles having a size of 0.2 to 1µm. In still a further embodiment, the open fiber matrix (10) has a particle efficiency of at least 10%, preferably at least 15%, more preferably at least 20 to 30% for particles having a size of 0.1µm.

The open fiber matrix (10) without being provided with the bonding agent and active particulate filter media formed into a pleated filter having a pleat height of 30 mm, a pleat distance (peak to peak) of 13mm and a surface of 500 cm² preferably has a pressure drop of not more than 250 Pa, preferably not more than 200 Pa and most preferably not more than 180 Pa when measured according to DIN71460 Part 1 with a face velocity of 2 m/s.

The open fiber matrix (10) is typically a nonwoven web of generally loosely associated fibers. The fibers can be formed into a nonwoven web layer through carding or air laying or any other web forming process. In order to provide dimensional stability to the nonwoven web layer, the fibers may be joined together and optionally to a supporting scrim layer through needling or ultrasonic welding. In a preferred embodiment of the present invention, the open fiber matrix (10) is a nonwoven web of electrically charged polymeric fibers, e.g. fibers of polyolefin such as polypropylene.

Charged fibers can be produced by the methods that have been described in U.S. Reissue Pat. No. 30,782 (Van Turnhout et al.) and U.S. Reissue Pat. No. 31,285 (Van Turnhout et al.). The method described in these patents comprises feeding a film of a high molecular weight non-polar substance, stretching the film, homopolarly charging the stretched film with the aid of corona elements and fibrillating the stretched charged film. Suitable film forming materials include polyolefins, such as polypropylene, linear low density polyethylene, poly-1-butene, polytetrafluoroethylene, polytrifluorochloroethylene; or polyvinylchloride; aromatic polyarenes; such as polystyrene; polycarbonates; polyesters; and copolymers and blends thereof. Preferred are polyolefins free of branched alkyl radicals and copolymers thereof. Particularly preferred are polypropylene and polypropylene copolymers. Various functional additives known in the art can be blended with the dielectric polymers or copolymers such as poly(4-methyl-1-pentene) as taught in U.S. Pat. No. 4,874,399, a fatty acid metal salt, as disclosed in U.S. Pat. No. 4,789,504, or particulates, as per U.S. Pat. No. 4,456,648.

The film may be charged in any of the known ways. For example, the film may be locally bilaterally charged by means of corona elements that carry on either side of the film equal but opposite potentials. Thereby the film is charged to almost twice as high a voltage as by means of unilateral charging, at one and the same corona voltage. The charged polymeric film material can be fibrillated in several ways. For example, a needle roller with metal needles running against the film can be used. Thereafter, the continuous fibers may be cut to a desired length.

The bonding agent used in the method to make the filter material may be applied in such a manner that the open matrix layer acts as a droplet filter and traps substantially all the bonding agent droplets within its matrix, preferably ensuring thereby that substantially no droplets penetrate all the way through the open matrix layer.

In one embodiment, the bonding agent is applied in such a manner that bonding agent droplets form a droplet gradient at least part of the way through the open matrix layer.

It is further generally preferred that the bonding agent is applied without substantially compressing the open matrix layer. For example, the bonding agent may be applied using at least one of spraying and inkjet printing. The bonding agent may further be applied in such a manner that the bonding droplets maintain substantially their shape on contact with fibers of the matrix layer and do not spread out into a film. It is further contemplated that the bonding agent is applied to one or more predetermined areas of the open fiber matrix, preferably in such a manner as to leave at least one area, cell or patch of the open fiber matrix substantially free of bonding agent. In particular, the method may include leaving a plurality of areas, cells or patches of the open fiber matrix substantially free of bonding agent, the area, cells or patches being small in area such as for example about 5mm across.

It is further generally preferred that the bonding agent to be applied has a viscosity in the range of 300 to 800 centipoise and preferably in the range of 400 to 650 centipoise. A too low viscosity may cause a reduction in the efficiency of the filter to remove gaseous pollution from the air stream because of inactivation of the active particulate filter media by a too fluid bonding agent. Similar, a too low viscosity of the bonding agent may cause a lowering of the openness of the open fiber matrix thereby causing an increase in pressure drop.

The bonding agent for use in connection with the method to make the filter material is typically an adhesive. Preferably the adhesive is tacky at room temperature and does not require heat activation. However, it is also contemplated that a heat activatable adhesive be used as the bonding agent. If a heat activatable adhesive is used, it will preferably have an activation temperature below the softening point of the fiber, in particular when electrically charged fibers are used for the open fiber matrix. Preferably, the activation temperature of a heat activatable adhesive for use in this invention is less that 90°C, preferably less than 70°C. Activating a heat activatable adhesive may be done by at least one of drying in an air stream, storing in a temperature controlled device such as an oven and activating using an infrared technique.

Examples of further bonding agents include in particular pressure sensitive adhesives and contact adhesives. When the filter material is intended for use in the filtration of air entering a passenger cabin of a vehicle, in particular a motor vehicle, the bonding agent is desirably an adhesive that does not smell and or that does not provide health risks. A particularly preferred adhesive is a water-based adhesive although solvent based adhesives can be used as well, however care may be necessary such that the solvent vapors do not inactivate the active particulate filter material. The adhesive may for example be an acrylate based adhesive that is waterborne. According to a particular embodiment, an adhesive solution comprising a solids content of at least 30%, preferably of at least 40%, more preferably of at least 50% may be used as the bonding agent.

The active particulate filter media may be applied in such a manner that it forms a layer in the region of an outer surface of the open fiber matrix layer or may be applied in such a manner that it penetrates into said matrix layer and preferably forms an active particulate filter media gradient at least part way through the open matrix layer. The active particulate filter media may further be applied by strip coating. Applying vibration to allow the particulate filter media to penetrate the open matrix layer may be practiced as well.

The filter material to be produced may include additional layers and accordingly, the method to produce such filter material may correspondingly include steps to apply such additional layer or layers. For example, an air permeable coverweb may be applied to a first side of the open matrix layer and/or a support layer to a second side of the open matrix layer. A support layer may be applied to the open fiber matrix layer before applying bonding agent or incorporating into the open matrix layer any or most of the active particulate filter media. The support layer and/or coverweb may be applied to the open fiber matrix layer by at least one of needling and ultrasonic welding.

Still further additional layers that may be included are for example additional filter layers, which may comprise an open fiber matrix layer and may be applied to at least one side of the filter material. A further support layer may be applied to an outboard side of an additional filter layer. Also, if desired, two or more layers of the filter material may be laminate together.

In a preferred embodiment, the filter material is further pleated. Also, the method of making the filter material may include the step of slitting the filter material.

The amount of active particulate filter media incorporated into the open matrix layer may be varied depending on at least one of the basis weight of the open fiber matrix layer and a grain size of the active particulate filter media. The active particulate filter media used may include at least one of: activated carbon/charcoal, activated alumina, silica gel, fuller's earth, zeolite, lime soda, calcium chloride or a catalytic agent comprising for example a metal oxide. Under active particulate filter material both absorbent and adsorbent materials should be understood.

The method may include performing the method at a low temperature, such as for example at room temperature.

The method may include forming the filter material into a filter element suitable for use in a vehicle air cleaning system

A filter material that can be obtained with the method of the invention comprises an open fiber matrix layer which incorporates an active particulate filter media and is joined on one side with a support layer, wherein at least some of said active particulate filter media is held in place in the open fiber matrix layer by discrete adhesive contacting regions of an applied bonding agent, the discrete adhesive contacting regions being distributed over and bound to individual ones of the fibers of the matrix layer.

A filter material according to the invention typically is air permeable and has a capability of filtering particles that have an average size of at least 2µm, preferably also has a capability of filtering particles that have an average size of 0.2µm to 1µm, and more preferably further has the capability of filtering particles that have an average size as low as 0.1µm. For example, in one embodiment, the filter material has a particle efficiency determined according to DIN71460 Part 1, of at least 50%, preferably at least 70% and more preferably at least 85% for particles having a size of 2µm or larger. In a further embodiment, the filter material has a particle efficiency of at least 10%, preferably at least 30%, more preferably at least 40% to 70% for particles having a size of 0.2 to 1µm. In still a further embodiment, the filter material has a particle efficiency of at least 10%, preferably at least 15%, more preferably at least 20 to 30% for particles having a size of 0.1µm. The filter material preferably also has an initial adsorption efficiency for n-butane of at least 50%, preferably at least 70%, more preferably at least 80%. The filter material preferably also has an initial adsorption efficiency for SO₂ of at least 50%, preferably at least 70%, more preferably at least 80%. The filter material preferably also has an initial adsorption efficiency for toluene of at least 50%, preferably at least 70%, more preferably at least 80%. These adsorption efficiencies being determined in accordance with DIN 71460 Part 1.

The filter material of the present invention when formed into a pleated filter with a pleat height of 30mm, a pleat distance of 13mm and a surface of 500cm² typically will have a pressure drop of not more than 250 Pa when tested according to DIN 71460 Part 1 at a face velocity of 2 m/s.

The filter material of the present invention will typically have a particulate filter efficiency and pressure drop that is similar to that of a same filter material without the particulate filter material and adhesive. With the term 'similar' in this context is meant that the same performance or a performance decrease of not more than 15%, preferably not more than 10%.

The filter material of the present invention may be used to filter air streams in any application where particle filtering and gaseous pollution filtering is desired. The filter material is in particular suitable for filtering air entering the passenger cabin of a vehicle, in particular a motor vehicle such as for example a car or truck. Accordingly, in a further aspect, the present invention provides a use of the filter material to filter air entering a passenger cabin of a vehicle. Further provided is also a vehicle, in particular a motor vehicle, that includes a passenger cabin and the filter material of the invention to filter air entering the passenger cabin of the vehicle.

The invention will now be described by way of example only and with reference to the accompanying drawings, in which:

### Brief Description of the Drawings

Figures 1a to 1c each show a filter structure according to an embodiment of the present invention;
Figure 2 shows in sketch form the structure of a filter layer according to an embodiment of the present invention;

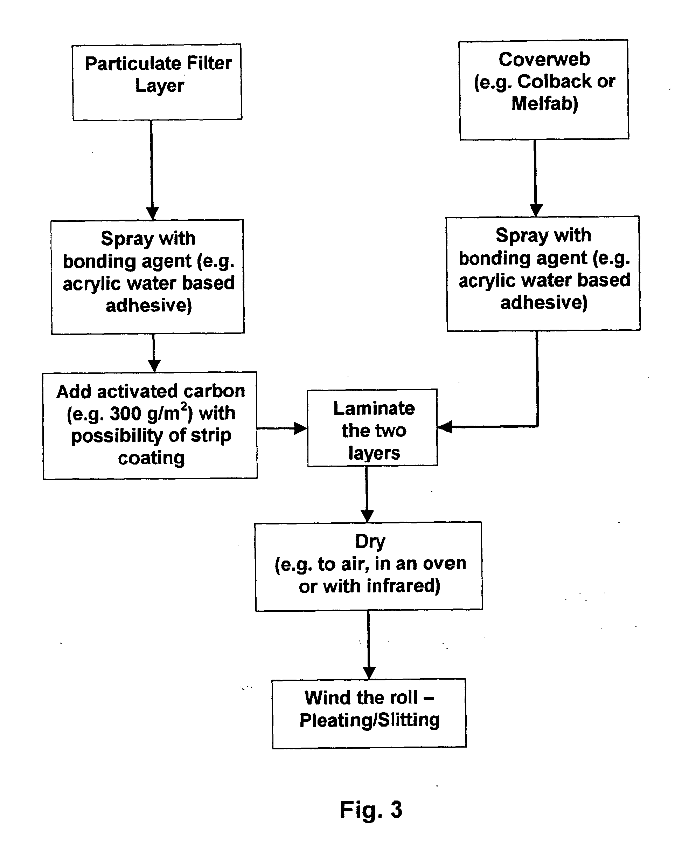

Figure 3 is a flow chart of a process for producing a filter according to an embodiment of the present invention;
Figure 6 shows how a filter material according to an embodiment of the present invention, or made in accordance with a process of the present invention, can be formed into a filter element;
Figure 7 is a schematic diagram of a manufacturing apparatus according to an embodiment of the present invention which is suitable for carrying out a manufacturing method of the present invention or for producing filter material according to at least one aspect of the present invention;
Figure 8 is a representation of a further embodiment of the present invention;
Figures 9a and 9b represent still further embodiments of the present invention, and
Fig. 10 is a schematic diagram of a further manufacturing apparatus according to an embodiment of the present invention which is suitable for carrying out a manufacturing method of the present invention or for producing filter material according to at least one aspect of the present invention.

### Detailed Description

The present invention will be described with reference to certain embodiments and drawings but the present invention is not limited thereto but only by the claims. The present invention will be described with reference to pleatable filter materials. Generally a sheet material can be described as rigid, such as a plank or wood or a pane of glass, semi-rigid, such as glass-fiber reinforced plastic sheet or supple such as textile materials. The present invention relates to filter to supple materials having a textile quality.

Referring to the figures, to produce a filter material according to an embodiment of the present invention a suitable media to use as a filter layer for trapping particulate matter is selected. For best through-flow of air, an open fiber matrix is preferred, e.g. formed from a loose mesh of fibers. Under current best practice, we recommend a mesh formed of electrically charged fibers, such as those known in the art as electret fibers. The electret fibers are preferably fibrillated film charged fibers, e.g. having a substantially rectangular cross-section. Typical base weights of the open fiber matrix may be 20-200 g/m².

In order to maintain a particulate filter layer 10 in a stable form, it is considered preferable to mount it onto a support layer, such as a scrim 12. Such a scrim-backed particle filter layer is disclosed in WO 93/16783, the disclosure of which is incorporated herein by way of reference. In that application, a particular way of joining the scrim to the particulate filter layer is disclosed, which is by needling the two together. A suitable combined electret particle filter layer 10 and support layer 12 of this type is available from the Minnesota Mining and Manufacturing Company under the trade name "3M Filtrete".

A further way of fixing the particulate filter layer 10 to its support layer, scrim 12, is by ultrasonic welding. The filter layer 10 is spread over the scrim 12 and they are welded together using a pointwise ultrasonic technique. This does not damage the open fiber matrix of electret fibers and, because it uses no adhesive, helps keep down obstruction of the air passages which might otherwise occur from excess glue at this stage of the process. Such a technique is discussed in, for example, US 4,433,024.

In the method of the invention, a bonding agent is applied to the open fiber matrix of the particulate filter layer 10. In one embodiment of the present invention the particulate filter layer 10 is fed from a roll 1 under a nozzle 2a, under which it is sprayed with a fine spray of a bonding agent. Under some circumstances the particulate filter layer 10 acts as particulate trap and removes the droplets of bonding agent from the spray mist, such that they are deposited onto the fibers and such that substantially none penetrate right through the whole layer 10. Through penetration is not, however, discounted as a possibility. The droplets adhere to individual fibers of the matrix thus forming discrete contacting regions distributed over individual ones of the fibers. Preferably, the adhesive contacting regions do not eliminate the electret action of the fibers completely. The regions of adhesive preferably cover at most 50% of the surface area of the fibers, more preferably at most 40% and most preferably at most 30%. Typically the dry adhesive weight is 50% or less, more preferably 30% or less of the basis weight of the fiber matrix layer.
A preferred bonding agent is a water based acrylate adhesive, whose properties lend themselves well to use at room temperature and without the need for specialist fume extraction plant. Such a compound may have solids content of at least 30%, more preferably at least 40%, most preferably at least 50%. In one embodiment the adhesive solution has a polymer content in the region of 50 to 60% giving a nominal in the region of 55%. The fluid adhesive material to be applied may have a viscosity of between 200 and 3000 centipoise, depending on the choice of particular glue. The applicants have found a range of 300 to 800 and preferably 400 to 650 centipoise to be useful.

In further embodiments, it may be found possible to use an organic solvent based adhesive, such as for example one based on Benzol (Benzene-toluene etc.), although this does potentially compromise the sorbing abilities of the adsorbate media.

The adhesive may be a pressure sensitive adhesive and/or a contact adhesive. Another option for a bonding agent is a hot melt or heat activated adhesive, although this is currently considered less preferable to the water based option discussed above. That is because in comparison such adhesives have been observed to produced larger sizes of droplets than the water based acrylic types and also tend to raise costs.

The fine spray distributes droplets of adhesive over fibers in the particulate filter layer 10 and these remain once the water has evaporated. The droplets attach themselves to individual ones of the fibers of the matrix. The distribution is in the form of small droplets or nodules which are spread about a large number of points on and among the fibers of the open fiber matrix, and is referred to for convenience here as pointwise distribution. The droplets are applied in a manner which does not significantly compress the open fiber matrix of the particulate filter layer 10. For example, if compressed gas such as air is used to propel adhesive through the nozzle 2a, the propellant may flatten or squash down the fiber matrix, reducing its open nature and leading to a potentially higher pressure drop across it. For this reason, it is preferred that the nozzle is set above the particulate filter layer 10 at a height at which any such propellant blast is substantially dissipated and does not reach the filter layer 10. Other methods of applying the bonding agent are anticipated, such as for example possibly inkjet printing or using a pumping arrangement.

The pointwise application of droplets is arranged to ensure that they retain some form on landing on the fibers, i.e. they stay as three dimensional nodules and do not spread out into a film or become a wetting agent and thereby avoid possibly soaking a large portion of the matrix. Accordingly the adhesive does not clog the open pore nature of the particulate filter layer 10 or otherwise compromise the properties of the electret fibers.

Once the particulate filter layer has been unrolled 1 and the bonding agent applied 2a, an active particulate filter media is added. This may be in the form of sorbate particles 3. Under sorbate filter material is meant either absorbing or adsorbing particulate matter. In the following only the word adsorbate will be used but the present invention includes in all cases absorbate materials as well. The application of the adsorbate particles 3 may be performed using a vibration technique, although other techniques such as strip coating may also be found equally preferable.

One suitable adsorbate filter media known in the art is activated carbon, although it is anticipated that the skilled person can chose equivalents and/or alternatives from what is known in the art. Some alternative or additional adsorbate media are discussed for example in US 5,332,426, US 4,061,807, and US 3,019,127. Preferred adsorbate media include, in dependence on the filtered fluid, for example one or more of the following; activated carbon / charcoal, activated alumina, silica gel, fuller's earth, zeolite, lime soda, calcium chloride or a catalytic agent comprising for example a metal oxide.

Staying with the example of activated carbon, suitable particles are found in the range of 150 to 2000 µm. The complete range is not one material but rather different overlapping size ranges are preferable, such as: 150 - 425, 250 - 600, 355 - 710 and 500 - 2000 µm. The particles could have CTC values (capacity for carbon tetrachloride) between 60 and 90%. The basis weights for the activated carbon used are in the range of 100 to 1000 g/m², although a suitable rate of addition might be 300 g/m².

The amount of adsorbate media which is held in the particulate filter layer 10 is variable, in dependence on the basis weight of the particle filter layer 10 and/or by the particle size. For example, typical particle sizes that can be used are 16X35 Mesh and 25X45 through to 40X100 Mesh.

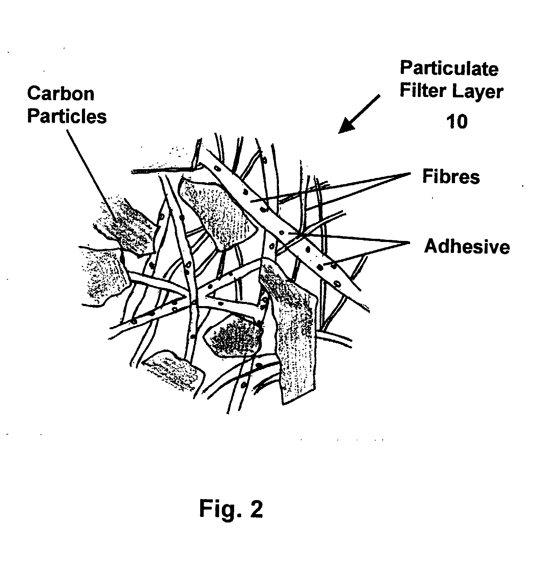

Referring now in particular to Figure 2, it can be seen that particles of the activated carbon come into contact with droplets of the adhesive and are held in place by point contact with the fine droplets of adhesive. The fine nature of the spray ensures that only very little adhesive is applied and there is therefore little surplus adhesive blocking air passages through the particulate filter layer 10 or affecting the electret efficiency.

Thus it can be seen that the adsorbate media can be substantially fixed in place with minimal increase in pressure drop across the filter. It should be noted, however, that it is highly unlikely for all the adsorbate media distributed onto and into the particulate filter layer 10 to be guaranteed an adhesive bond with the droplets. It is accepted that there may be a quantity of adsorbate media which takes up position through the particulate filter layer 10 in a loose fashion by merely being trapped therein rather than positively fixed by adhesive.

The bonding agent may applied in such a manner that it does not penetrate very far at all into the particle filter layer 10, in which case the adsorbate media will form a layer within an outer surface of the particulate filter layer 10. If greater adsorbate capacity is felt desirable, however, it may prove preferable to apply the bonding agent in such a manner that it creates an adhesive gradient through at least part of the particulate filter layer. This enables a corresponding adsorbate media gradient to be established.

Under general circumstances, the region of the particulate filter layer 10 most densely populated with adsorbate media is preferably to a side of the finished filter material which is downstream of the unfiltered air-stream. This allows the electret fibers to filter out particulate pollution before it reaches the region of the material used for adsorption. In similar fashion, an adsorbate media gradient would preferably ramp upwards to the airflow as it progresses downstream through the filter material. It may be found, however, that in some circumstances is equally effective or even preferable to position the filter material such that the heavily adsorbate media loaded side is upstream of the unfiltered air and that the adsorbate media gradient tails off as the airflow passes through the fiber matrix 10.

After application of the adhesive droplets they may be activated, e.g. by removal of solvent by: drying in air, in a temperature controlled device such as an oven or by infrared techniques. The activation of the adhesive should be carried out at a temperature which will not damage or compromise the ability of the open fiber matrix to trap in use particulate pollution. For example, in the case of electrically charged fibers such as electret fibers, a curing temperature no higher than 90°C is recommended and a bonding agent to suit should be selected.

At this stage in the process, an air permeable and preferable pleatable coverweb 14 is applied to a first side of the particulate filter layer 10, the scrim 12 facing the other way. A suitable coverweb 14 may be formed from a polyester/nylon bi-component fiber such as is available commercially under the trade names Colbeck 75W or Melfab. Other coverweb materials may prove just as preferable, the main concern being to provide additional support to the adsorbate media so as to help the adhesive droplets in keeping it in place in the particulate filter. This is especially so if the finished product is to be formed into a filter or filter element suitable for use in an environment such as a vehicle, where it might be subject to media loosening vibrations. The basis weight of the coverweb may be in the range 25 to 500 g/m², more preferably in the range 50 to 200 g/m². To apply the coverweb 14 it is first coated with a bonding agent, for example by spraying under a nozzle 2b in similar fashion to the application of bonding agent to the particulate filter layer 10 at its spraying station 2a. It may be found preferable to use the same kind of water based acrylic adhesive as is used in spraying 2a the particulate filter layer 10, so that for example a common activating arrangement can be employed. Less than 50%, more preferred less than 30% dry weight adhesive may be applied based on the basis weight of the coverweb.

In similar fashion to the application of the adhesive for the adsorbate media, the adhesive applied to the coverweb 14 may be dried by any suitable means, e.g. air drying, or in an oven or by infrared lamps.

The sprayed coverweb 14 is then fed by a series of rollers 5 into unison with the particulate filter layer 10. A preferred manner of joining the coverweb 14 to the sprayed and adsorbate media-loaded particulate filter layer 10 is by lamination.

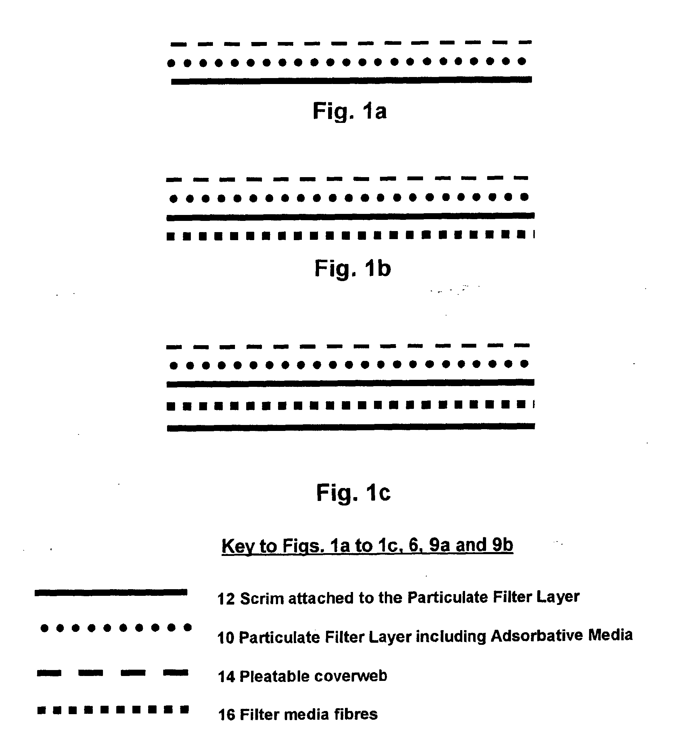

At this stage, a filter material has been formed in accordance with one embodiment of the invention, which can be seen with particular reference to Figure 1a. The filter material can then be rolled up for later processing, or perhaps processed immediately by pleating it or slitting it into useable pieces and possibly forming it into filter elements.

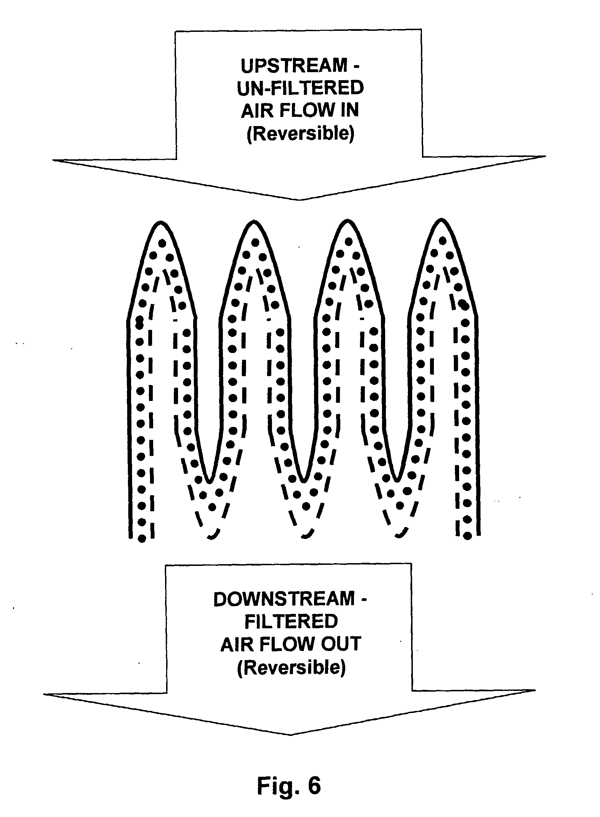

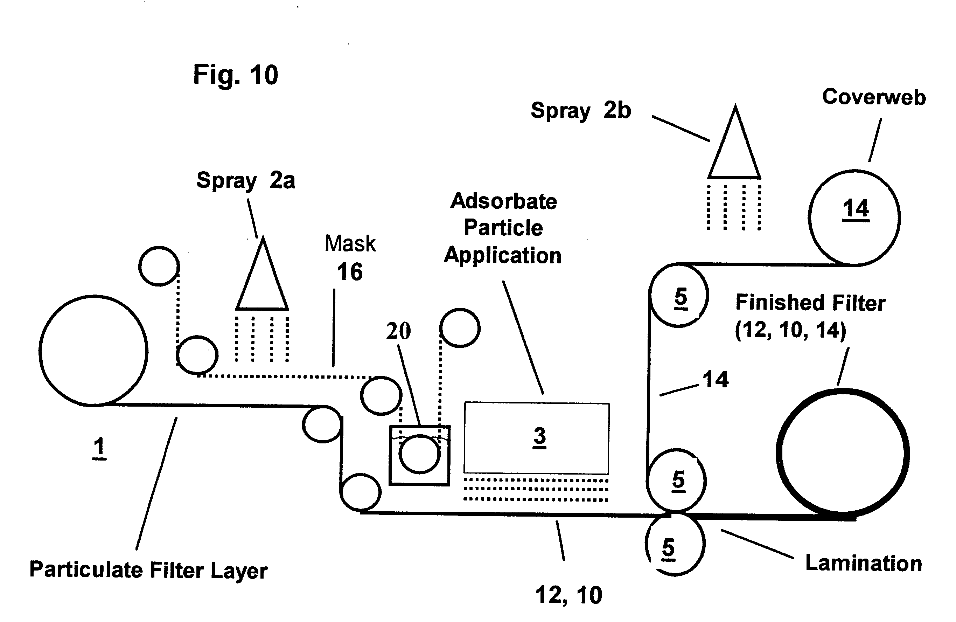

By way of example, a piece of finished filter material 10, 12, 14 which is in accordance with Figure 1a and which has been folded in a zigzag manner or pleated to form a filter element for a vehicle air conditioning system or similar will be considered. Such an arrangement is shown by way of example with particular reference to Figure 6, although it will be appreciated that the airflow shown may be reversed. In the example, the filter material has been folded into a zigzag so as to provide a greatly increased frontal area to the air flow for the space available in the frontal plane of an air cleaner box. This demonstrates how filters according to this invention could be adapted to suit the sort of arrangements disclosed with reference to WO 94/01200, the disclosure of which document is hereby incorporated herein by way of reference.

Referring to this example, in use unfiltered air enters the filter material through the scrim 12 and passes through the particulate filter layer 10, where it is cleaned mechanically and/or electrostatically for particulate matter by the electret fiber mesh.

The substantially particulate free air then continues downstream through the portion of the fiber matrix which includes the adsorbate media, both fixed and loose granules, and is further cleaned from gaseous pollution by the adsorbate media. The airflow is subjected to an increasing level of adsorbate media as the gradient ramps up. The cleaned air then passes downstream through the coverweb 14 and on to its users.

Further layers can be added to a filter material according to this invention during its manufacture. Referring now in particular to Figure 1b, a filter material according to Figure 1a is modified by the application of an additional layer of filter media fibers, which in this example comprise an additional layer 14 of particulate filter fibers. In the example shown, this additional layer is placed outboard or remote of the scrim 12 of the basic filter structure 10, 12, 14.

Referring now in particular to figure 1c, a further modification to the filter structure is envisaged. This is executed by the application to an outboard side of the further particulate filter layer 14 of an additional scrim 12 layer. This structure can most easily be achieved by applying a combined scrim 12 and particulate filter layer 10 (e.g. "3M Filtrete" ™) to the structure of Figure 1a.

If the filter material of either Figure 1b or Figure 1c is used in the orientation shown by way of example in Figure 6 in relation to the filter material of Figure 1a, then in either case its extra layer of electret fibers will act as a prefilter to the layer which has been loaded with adsorbate media. In the case when the air flows in the direction opposite to that shown in Figure 6, it acts as a second stage particulate or post filer.

In the case of the arrangement of Figure 1b, it will be noted that it may be desirable to join the extra layer of electret fibers to the scrim 12 of the adsorbate media loaded layer 10, 12, 14. In the case of the arrangement of Figure 1c, the extra layer of electret fibers could be joined to either or both of the scrim layers sandwiching it.

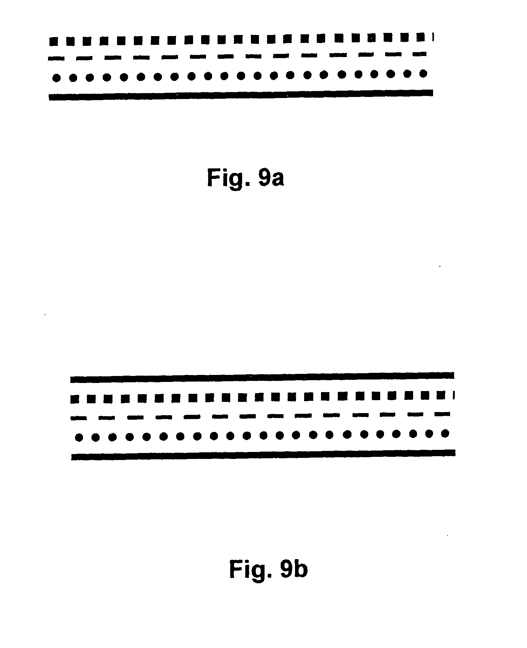

It will be apparent that an arrangement can be produced in which the extra layer of electret fibers and its associated scrim may be placed to the outboard side of the coverweb 14. In this manner, the filter material is provided with a particulate filter trap to either side of the portion loaded with adsorbate media and this may be found to assist bi-directionality, such as might be useful if used for protective clothing or as a respirator. Such an arrangement is shown schematically without and with an outer scrim 12 with particular reference to Figures 9a and 9b respectively, using the same key as Figures 1a to 1c and 6.

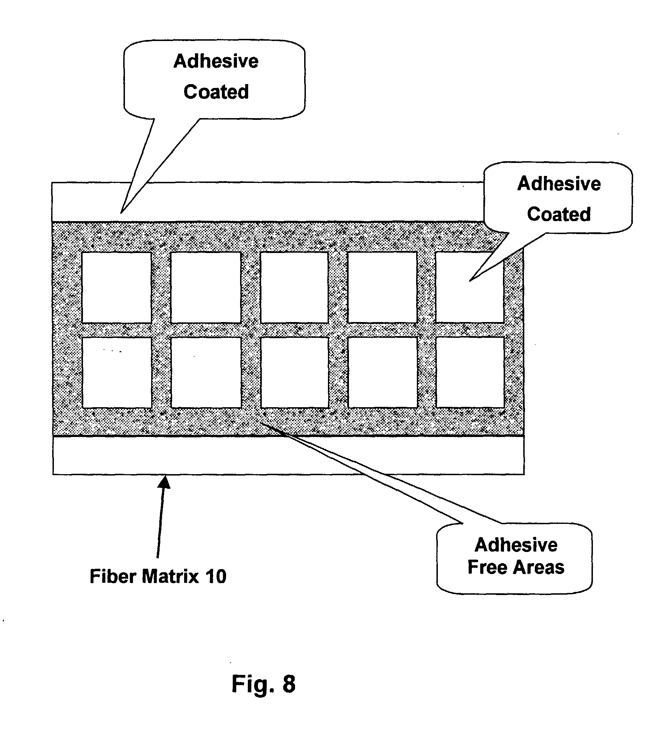

Referring now in particular to Figure 8, in a modification to the invention, a filter structure is disclosed in which the bonding agent is only applied to one or more predetermined areas of the particulate filter layer 10. A predetermined area of the particulate filter layer 10 is left substantially free of bonding agent. Either of the adhesive free or adhesive containing areas may be split up into several smaller areas, which to the eye looking at them in plan view may appear as patches.

Although the filter material is of a substantially flat structure, its layering means it must be treated as a three dimensional structure. As dry patches represent portions of the filter material which is substantially free of bonding agent right the way through, it may be preferred to consider these parts of the filter materials as adhesive-free cells which provide a more free passage to airflow through the filter material. In these patches or cells, although there is little or no adsorbate media glued in place, there will still be the loose adsorbate media trapped in the open fiber matrix and this will be held in place at least in part by the coverweb 14 and will provide some adsorbate protection.

The compromise involved in this embodiment acknowledges that, even at the low levels of bonding agent used in this invention, the bonding agent will still have some effect on the efficiency of the electret fibers. In the cells, however, the opposite is true, in that the electret activity is performing to its full capacity whereas it is the adhesive fixing of the adsorbate media which must give way to allow this. The two dimensional surfaces (i.e. patches), which are the entrances/exits to the cells, are preferably small in area. Shape is not critical, but for a shape approximating to for example a square or a circle, it is considered that a size of about 5mm across in one dimension may be found suitable. An arrangement such as this can be used to supplement the reduced levels of bonding agent by reducing even further the coverage of the electret fibers by adhesive, possibly even by as much as 50%. While Figure 8 shows patches/cells bounded by a region of non-adhesive loaded matrix, it will be apparent that an equivalent arrangement may be produced in which the cells/patches of adhesive loaded electret matrix bound one or more areas which are not loaded with adhesive bonded adsorbate media.

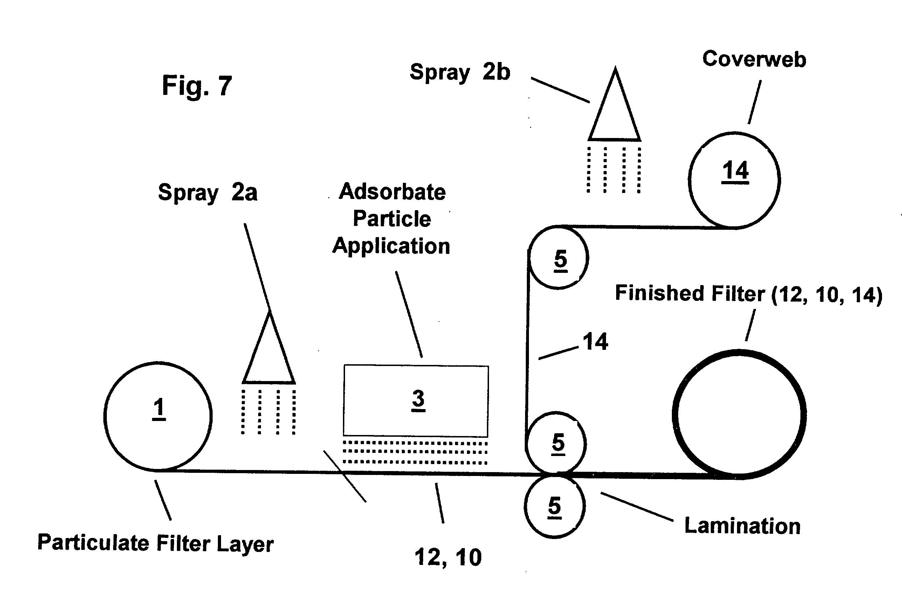

A method of manufacture of the above embodiment is shown schematically in figure 10. Items with the same reference numbers as indicated in Fig. 7 refer to the same items. The main difference is the inclusion of a mask 16 which moves between the spray arrangement 2A and the web of fiber matrix to be coated. the mask may be made of suitable material such as thin stainless steel sheet into which an array of holes has been fabricated, e.g. by stamping such as to allow a mist of adhesive droplets to penetrate through to the web. Adhesive which falls onto the top of the mask can be removed by passing the mask through a cleaning bath 20. The mask 16 moves with the same speed as the web of fibers so that discrete areas of the web are contacted with the adhesive mist.

The following examples illustrate the invention further without however intending to limit the invention thereto.

### Comparative Example 1

A combination filter comprising a particulate filter layer and an active carbon layer was prepared. The combination filter consisted in the order given of a cover web having a weight of 10g/m², a non woven layer of electret fibers at a weight of 40g/m², a carbon layer comprising 400g/m² of carbon bonded to a netting of 100g/m² and a polypropylene scrim at 20g/m². The combination filter was pleated with a pleat height of 30mm and a pleat distance of 13 mm.
The sample is designated A.

### Example 1

A filter material according to the invention was prepared for direct comparison to comparative example 1. This filter material was prepared by providing on a coverweb of 10g/m², a non woven layer of electret fibers at 40g/m². The fiber layer was provided with an acrylic adhesive at a weight of 10g/m² by spraying the electret fibers with an aqueous dispersion of the acrylic adhesive. 400g/m² of active carbon was then spread on the non woven layer and a cover web sprayed with 20g/m² of acrylic adhesive was then laminated thereto. The non woven layer provided with the active carbon showed a gradient of carbon along its thickness. The thus obtained filter was pleated with a pleat height of 30mm and a pleat distance of 13mm. The sample is designated B.

### Comparative example 2

A combination filter was prepared by providing on a pleatable backing a layer of 340g/m² of active carbon and 60 g/m² of a binder and the thus obtained layer was then baked to form a active carbon agglomerate layer. Upon this layer was then provided a non woven layer of electret fibers at a weight of 40g/m² and 10g/m² of a coverweb. This layer combination was pleated to a pleat height of 18mm and a pleat distance of 13mm. The sample is designated C.

### Example 2.

A filter material according to this invention was prepared for direct comparison to comparative example 2. This filter material was prepared in the same way as in example 1 except that the amount of active carbon was reduced to 300g/m². The filter material was pleated with a pleat height of 18mm and a pleat distance of 13mm The sample is designated D.

Samples A to D were subjected to a series of tests to determine the performance of each individual filter material.

The test parameters used were in accordance with the draft DIN 71460 Parts 1 and 2, tests for complete filters. The parameters measured were the adsorption efficiencies at initial use for n-Butane, SO₂ and Toluene. Also measured were the efficiency in trapping particles of predetermined sizes, i.e. 0.25-0.35, 0.75-1.0 and 2.0-3.0 µm. Part loading in (g) was also measured, as was the pressure drop (in Pascal) for various airflow rates.

The results obtained are shown in the table 1 below. Good improvements can be observed in both the gas adsorption abilities and in the pressure drop of the filter of the invention.

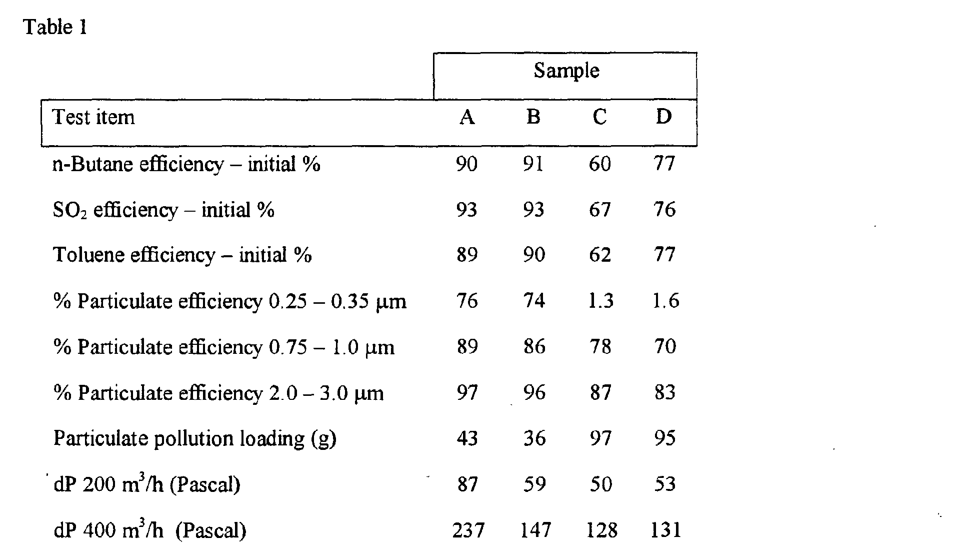

In addition tests have been performed with reference to stiffness of the laminated filter material. The filter material is preferably a supple textile-like material. A test specimen 3.5 cm wide and 3.5 cm long was mounted in a Taber V-5 Stiffness tester equipped with a 0.0-1.0 unit Ultrasensitive range attachment. The bending moment to flex the sample ± 15° was determined in the machine direction and the cross-direction according to test PSTC-37 described in Test Methods for Pressure sensitive tapes, 6^{th} Edition (1970). The average value was 90 g-cm. The material according to the invention was supple and easy to handle. Material which is considerably stiffer can be used in filter arrangements, e.g. materials with bending moments of 5000 or less, 2000 or less, 1000 or less or 500 g-cm or less. For pleated materials 300 g-cm or less may be suitable.

It can therefore be seen that a filter according to the invention or manufactured in accordance with the method of the invention provides better use of materials, improved performance and improved service life. At the same time it lends itself well to filter production in an environment which needs no fume extraction or onerous temperature control. Producing the filter in a relatively low temperature environment also permits a wide choice of scrim 12 material.

While the invention has been shown and described with reference to preferred embodiments, it will be understood by those skilled in the art that various changes or modifications in form and detail may be made without departing from the scope and spirit of this invention. For instance filter material according to embodiments of the present invention may be used to form filter elements in a variety of devices, e.g. in cabin air filters for vehicles, air conditioning devices, respirators and protective clothing.

## Claims

1. A method of producing a filter material, the method including:
applying droplets of a bonding agent over at least a portion of a layer of an open fiber matrix (10) to form a plurality of discrete adhesive contacting regions distributed over and bound to individual ones of at least some of the fibers of said matrix layer;

2. applying an active particulate filter media to at least a part of said portion such that at least some of said active particulate filter media is substantially fixed in place in said matrix layer by said adhesive contacting regions, thereby fixing in place said active particulate filter media whilst maintaining a substantially open fiber structure of said matrix layer.

3. A method according to claim 1, including applying said bonding agent in such a manner that a density gradient of the adhesive contacting regions is formed at least part of the way through said matrix layer (10).

4. A method according to any preceding claim, including applying said bonding agent in such a manner as to substantially avoid compressing said matrix layer (10).

5. A method according any preceding claim, wherein the bonding agent to be applied has a viscosity in the range of 300 to 800 centipoise and preferably in the range of 400 to 650 centipoise.

6. A method according to any preceding claim wherein said bonding agent comprises an acrylate based adhesive.

7. A method according to any preceding claim, including forming said matrix layer (10) at least in part from electrically charged fibers.

8. A method according to any preceding claim, including applying an air permeable coverweb (14) to a first side of said matrix layer (10).

9. A method according to any preceding claim, including applying a support layer (12) to a second side of said matrix layer (10).

10. A method according to any preceding claim, including at least one of pleating and slitting said filter material (10, 12).

11. A method according to any preceding claim wherein said active particulate filter media comprises at least one of activated carbon/charcoal, activated alumina, silica gel, fuller's earth, zeolite, lime soda, calcium chloride or a catalytic agent comprising for example a metal oxide.

12. A method according to any preceding claim wherein said open fiber matrix layer when formed into a filter material without being provided with said bonding agent and active particulate filter media has a particle efficiency determined according to DIN71460 Part 1, of at least 50%, preferably at least 70% and more preferably at least 85% for particles having a size of 2µm or larger.

13. A method according to any preceding claim wherein said open fiber matrix layer when formed into a filter material without being provided with said bonding agent and active particulate filter media and being formed into a pleated filter with a pleat height of 30mm, a pleat distance of 13mm and a surface of 500cm² has a pressure drop of not more than 250 Pa when measured according to DIN71460 Part 1 with a face velocity of 2 m/s.

14. A filter material comprising an open fiber matrix layer which incorporates an active particulate filter media and is joined on one side with a support layer, wherein at least some of said active particulate filter media is held in place in said matrix layer by discrete adhesive contacting regions of an applied bonding agent, said discrete adhesive contacting regions being distributed over and bound to individual ones of the fibers of said matrix layer.

15. A filter material according to claim 14, wherein said bonding agent comprises an acrylate based adhesive.

16. A filter material according to any one of claims 14 to 15, further comprising an air-permeable coverweb (14) applied to a side of said open fiber matrix layer (10) remote to said support layer.

17. A filter material according to any one of claims 14 to 16, wherein said support layer (12) is joined to said matrix layer (10) by at least one of needling and ultrasonic welding.

18. A filter material according to any one of claims 14 to 17, said matrix layer (10) comprising electrically charged fibers.

19. A filter material according to any of claims 14 to 18 wherein said filter material has a particle efficiency determined according to DIN 71460 Part 1, of at least 50%, preferably at least 70% and more preferably at least 85% for particles having a size of 2µm or larger.

20. A filter material according to claim 19 wherein said filter material formed into a pleated filter with a pleat height of 30mm, a pleat distance of 13mm and a surface of 500cm² has a pressure drop of not more than 250 Pa when measured according to DIN71460 Part 1 with a face velocity of 2 m/s.

21. A filter material according to any of claims 14 to 20 wherein said filter material has an initial adsorption efficiency for at least one n-butane, SO₂ and toluene of at least 50%.

22. Filter material according to any of claims 14 to 20 wherein said filter material is provided as a pleated filter material.

23. Use of a filter material as defined in any of claims 14 to 22 for filtering air entering the passenger cabin of a vehicle.

24. Vehicle including a passenger cabin and a filter material as defined in any of claims 14 to 22 for filtering air entering the passenger cabin.
